# EUROPEAN PATENT APPLICATION

(11) **EP 1 389 851 A1**
(43) Date of publication of application: **18.02.2004**
(21) Application number: 03254848.9
(22) Date of filing: 04.08.2003
(51) Int. Cl.: H04L 12/24, H04L 29/12, G06F 9/445

(54) **Auto configuration of network devices using a server storing mappings between network device identifiers and configuration settings**

(30) Priority: 13.08.2002 JP 2002235516
(71) Applicant: SEIKO EPSON CORPORATION, Shinjuku-ku, Tokyo 163-0811 (JP)
(72) Inventor: Shima, Toshihiro, Seiko Epson Corporation, Suwa-shi Nagano-ken 392-8502 (JP)
(74) Representative: Sturt, Clifford Mark

(57) **Abstract**

A server is connected with multiple printers as network devices via a network. The server maps setting information to MAC addresses of the respective printers and stores the mapping to consolidate the management. Each of the printers sends a setting information transmission request including its own MAC address to the server. The server then selects setting information mapped to the MAC address and transmits the selected setting information to the printer. The printer receives the transmitted setting information and updates the storage contents of a built-in setting information memory module, based on the received setting information. This arrangement effectively relieves the load of setting operations for various network devices.

## Description

### BACKGROUND OF THE INVENTION

### 1. Field of the Invention

The present invention relates to auto setting for network devices.

### 2. Description of the Related Art

Various network devices, such as personal computers, network printers, and routers, have been used in various fields. Such network devices require diverse settings to establish connection with a network and utilize services, for example, trouble reporting to a network administrator.

The setting operations for the network devices are rather time-consuming and labor-consuming. Especially when it is required to perform settings in a large number of network devices, as in the case where a company installs a lot of network devices all at once, there is an extreme load of the setting operations.

### SUMMARY OF THE INVENTION

The object of the present invention is thus to remove the drawback of the prior art technique and to relieve the load of setting operations for a network device.

In order to attain at least part of the above and the other related objects, the present invention is directed to a network device that connects with a network in use. The network is also connected with an information processing device storing setting information that is used for a preset control of the network device. The network device includes: a setting information memory module that is configured to store the setting information; a receiver module that receives setting information, which is mapped to predetermined identification information allocated to the network device, via the network from the information processing device that stores the setting information mapped to the predetermined identification information for identifying the network device; and an update module that updates the storage in the setting information memory module, based on the received setting information.

The information processing device maps setting information to identification information of one or multiple network devices and stores the mapping to consolidate the management. The 'setting information' includes various pieces of information used for control of the network device. The setting information includes, for example, communication-related setting information regarding communication via the network and operation-related setting information regarding operations of the network device.

The network device obtains the setting information from the information processing device to implement auto setting. This arrangement desirably relieves the load of setting operations for initial setting or setting update of the setting information in the network device. The setting information sent from the information processing device to the network device may be only the setting information mapped to the predetermined identification information allocated to the network device or may otherwise include setting information mapped to identification information allocated to another network device.

In one preferable application of the network device of the invention, the update module selects the setting information mapped to the predetermined identification information for identifying the network device among the received setting information, when the received setting information includes setting information mapped to identification information allocated to another network device.

When the network device collectively receives multiple series of setting information mapped to identification information of multiple network devices from the information processing device, this arrangement enables the network device to select only a series of setting information mapped to the predetermined identification information allocated to the network device among the multiple series of setting information and adequately update the stored setting information with the selected series of setting information.

In one preferable embodiment of the invention, the network device further includes a transmitter module that sends a transmission request of the setting information to the information processing device via the network.

This structure causes the information processing device to transmit the setting information in response to the transmission request sent from the network device. Even when a firewall is present between the network device and the information processing device, the network device can readily obtain the setting information through an access to the information processing device.

In the network device of the present invention, the transmission request may include the predetermined identification information.

The information processing device may store multiple series of setting information mapped to identification information of multiple network devices. This arrangement enables the information processing device to select a series of setting information corresponding to the predetermined identification information received from the network device and transmit the selected series of setting information.

In the network device equipped with the transmitter module, it is preferable that the transmitter module sends the transmission request in response to a requirement from the information processing device.

This structure enables the network device to send the transmission request to the information processing device at a timing specified by the information processing device, for example, at a timing of update of the setting information stored in the information processing device, in order to obtain and update the setting information. The arrangement desirably reduces non-required accesses to the information processing device.

In one preferable embodiment, the network device equipped with the transmitter module further includes a search module that searches for a location of the information processing device on the network.

Even when the location of the information processing device, which stores the setting information, on the network is unknown to the network device, the network device of this structure searches for the location of the information processing device to obtain and update the setting information. This structure does not require the location of the information processing device on the network to be stored in advance in the network device.

In the network device equipped with the transmitter module, it is also preferable that the information processing device is present at a certain location on the network, which is known to the network device.

This network device does not include the search module and accordingly has the simplified structure.

In the network device equipped with the transmitter module, the transmission request may be sent at various timings. For example, the transmitter module may send the transmission request on a start-up of the network device.

This arrangement enables the network device to obtain and update the setting information on every start-up of the network device.

In the network device equipped with the transmitter module, when the setting information includes transmission timing information regarding a timing of the transmission, the transmission module may send the transmission request based on the transmission timing information.

This arrangement enables the network device to obtain and update the setting information at a preset timing, for example, at a preset date and time, or at regular intervals.

In the network device equipped with the transmitter module, it is preferable that the transmitter module sends the transmission request, when the receiver module receives a notice showing that the setting information stored in the information processing device has been updated.

This arrangement enables the network device to obtain and update the setting information in response to every update of the setting information stored in the information processing device.

In the network device of the present invention, the identification information may be set in advance on shipment of the network device.

The identification information set in advance on shipment of the network device is, for example, an MAC address or a serial number of the network device. This arrangement does not require the user to individually set the identification information in the network device.

The identification information may be set after shipment of the network device.

The identification information set after shipment of the network device is, for example, an IP address or a 'name' of the network device. This arrangement enables the user to flexibly set the identification information in the network device.

In the network device of the present invention, the identification information may be set based on a location of the network device.

Available examples of the identification information set based on the location of the network device include global positioning information of the network device by the GPS (Global Positioning System), coordinate information of the network device in a preset space, and floor or area information on or in which the network device is located, like the first floor or the second floor of a building. The global positioning information may be input automatically from a GPS cell phone or another position detector into the network device or may be input manually by the user. When the network device at a certain location is replaced by another network device, the setting information for the old network device can readily be carried over to the replaced network device.

The technique of the present invention is applicable to any of diverse network devices. A typical example of the network device is a printing device. The invention is also applicable to other network devices, for example, personal computers, routers, scanners, and network-oriented electric appliances.

The printing device is one of the most frequently used network devices. The printing device requires a number of settings in addition to the communication-related setting, for example, printing-related settings on the printing quality and the printing paper and authority-related setting on the right to use the printing device. The technique of the present invention is thus advantageously applied for the printing devices.

The present invention is not restricted to the network device discussed above, but may be constructed as a setting method of carrying out specified setting to control such a network device. The invention may also be actualized by a computer program that attains the setting method, a recording medium in which such a computer program is recorded, a data signal that includes such a computer program and is embodied in a carrier wave, and a variety of other suitable applications. The additional factors discussed above with regard to the network device may also be adopted in the respective applications.

When the technique of the present invention is actualized as either the computer program or the recording medium in which the computer program is recorded, the construction may include the whole program for actuating the network device or only a specific part of the program that attains the characteristic functions of the present invention. Typical examples of the recording medium include flexible disks, CD-ROMs, DVD-ROMs, magneto-optic discs, IC cards, ROM cartridges, punched cards, prints with barcodes or other codes printed thereon, internal storage devices (memories like RAMs and ROMs) and external storage devices of computers, and a diversity of other computer readable media.

These and other objects, features, aspects, and advantages of the present invention will become more apparent from the following detailed description of the preferred embodiments with the accompanying drawings.

### BRIEF DESCRIPTION OF THE DRAWINGS

Fig. 1 schematically illustrates the construction of a network system in one embodiment of the invention;
Fig. 2 schematically illustrates the structure of a server included in the network system of Fig. 1;
Fig. 3 schematically illustrates the structure of a printer included in the network system of Fig. 1;
Fig. 4 is a flowchart showing a setting information update routine executed in a first embodiment of the invention;
Fig. 5 is a flowchart showing a setting information update routine executed in a second embodiment; and
Fig. 6 conceptually shows an example of information stored in the server in modified example 1.

### DESCRIPTION OF THE PREFERRED EMBODIMENTS

Some modes of carrying out the invention are discussed below as preferred embodiments in the following sequence:
A. Construction of Network System
B. Structure of Server
C. Structure of Printer
D. Update Process of Setting Information (First Embodiment)
E. Update Process of Setting Information (Second Embodiment)
F. Modifications

### A. Construction of Network

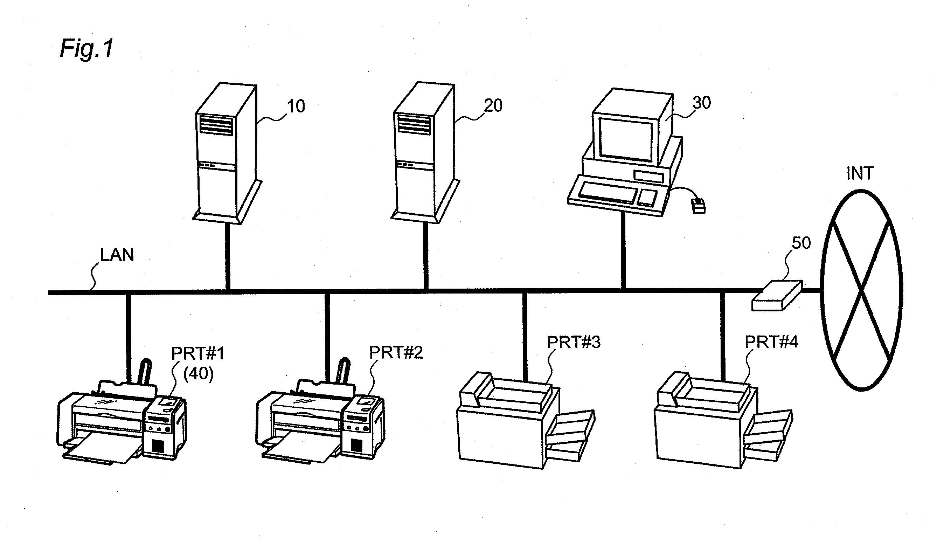

Fig. 1 schematically illustrates the construction of a network system in one embodiment of the invention. This network system includes two servers 10 and 20, a general-purpose personal computer 30 used by a network administrator, multiple network printers 40 (PRT#1, PRT#2, PRT#3, PRT#4, ...) (hereafter simply referred to as printers 40), and a router 50. These constituents of the network system are mutually connected via a local area network LAN. Plural other personal computers (not shown) are also connected to the LAN and may use the printers 40 for printing.

The server 10 is a DHCP (Dynamic Host Configuration Protocol) server. When receiving an IP address allocation request from a network device newly connected to the LAN, the DHCP server 10 allocates an IP address, which is different from IP addresses allocated in advance to other network devices connecting with the LAN, to the newly connected network device.

The server 20 maps setting information to identification information of the respective printers 40 and stores the mapping to consolidate the management. The functions of the server 20 will be discussed in detail later.

Network printer management utility software is installed in the personal computer 30. The network administrator uses the personal computer 30 to manage the multiple printers 40 on the LAN.

Each of the printers 40 is controlled on the basis of setting information stored therein. The printer 40 corresponds to the network device of the invention.

The router 50 relays the LAN to the Internet. The router 50 also functions as a firewall to prevent external illegal accesses to the LAN.

### B. Structure of Server

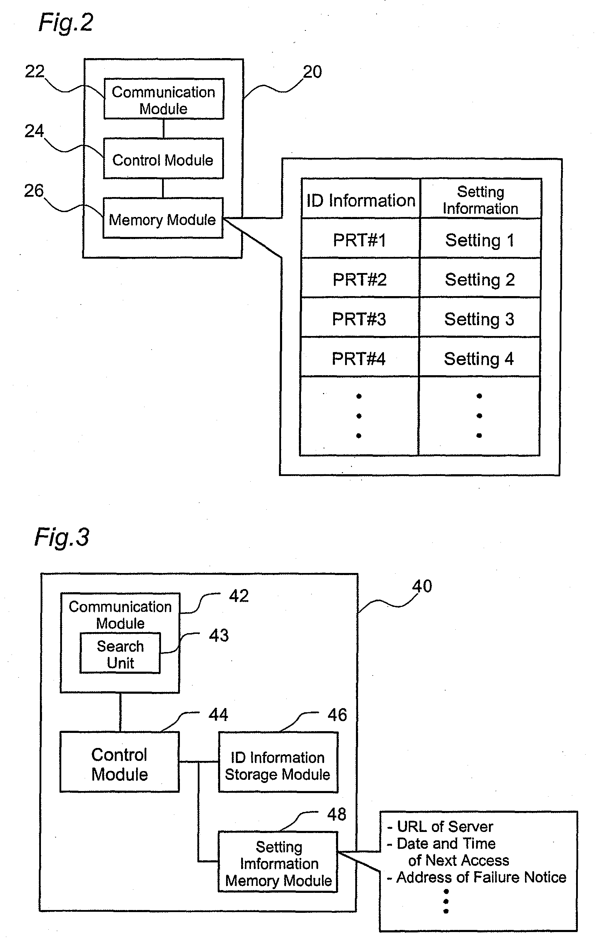

Fig. 2 schematically illustrates the structure of the server 20. The server 20 includes a communication module 22, a control module 24, and a memory module 26. These functional blocks are actualized by the software configuration.

The communication module 22 transmits various data to and from the outside of the server 20, for example, each of the printers 40 and the personal computer 30. The control module 24 controls the respective functional blocks included in the server 20. The memory module 26 maps the setting information to the identification information of the respective printers 40 and stores the mapping as shown in Fig. 2. In this embodiment, an MAC address allocated to each of the printers 40 is applied for the identification information. The storage contents of the memory module 26 are updated by the network administrator according to the requirements, for example, in the case of a requirement of modifying the setting information stored in the printer 40.

### C. Structure of Printer

Fig. 3 schematically illustrates the structure of the printer 40. The printer 40 includes a communication module 42, a control module 44, an identification information storage module 46, and a setting information memory module 48. The communication module 42 has a search unit 43. These functional blocks are actualized by the software configuration, although the functional blocks may alternatively be constructed by the hardware. The hardware structure of the printer 40 is not illustrated nor described here.

The communication module 42 transmits various data to and from the outside of the printer 40, for example, the server 20 and the personal computer 30. The search unit 43 searches for the location of the server 20 on the LAN.

The identification information storage module 46 stores an MAC address intrinsically allocated to each of the printers 40 at the time of shipment as the identification information for identifying the printer 40. Another piece of information, for example, a serial number of the printer 40, may be used as the identification information, as long as that piece of information corresponds to the information stored in the server 20.

The setting information memory module 48 stores setting information utilized for various controls of the printer 40. Examples of the setting information stored in the setting information memory module 48 include a URL of the server 20, the date and time of a next access to the server 20, an address of a failure notice (for example, a mail address), an IP address of the printer 40, printing-related setting information on the printer 40, for example, settings of printing quality and printing paper, and authority-related setting information regarding the right to use the printer 40. The items included in the setting information may be specified arbitrarily. In the structure of this embodiment, there is no default entry in such setting information.

The control module 44 controls the respective functional blocks included in the printer 40. The control module 44 implements various controls according to the setting information stored in the setting information memory module 48. The control module 44 also carries out a process of updating the storage contents of the setting information memory module 48, based on the setting information received from the server 20.

### D. Update Process of Setting Information (First Embodiment)

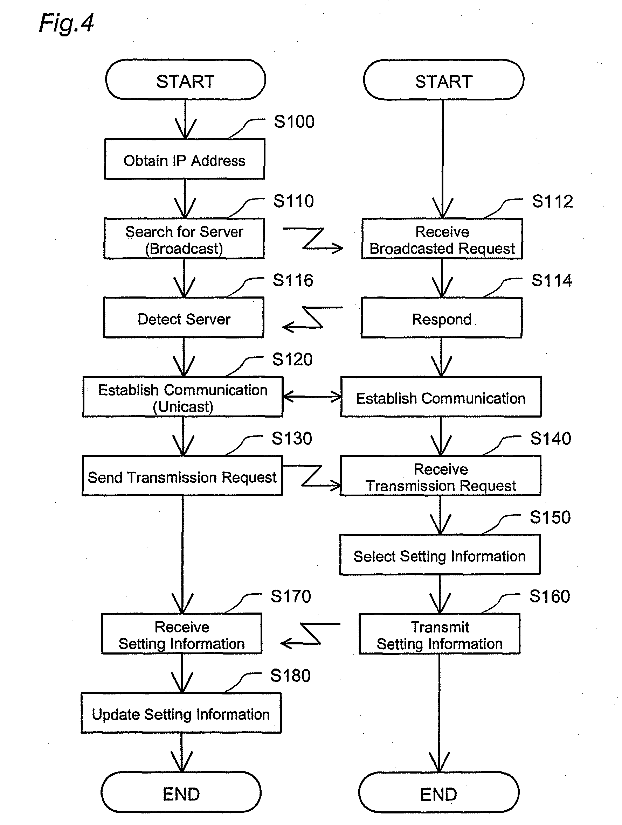

Fig. 4 is a flowchart showing a setting information update routine executed in a first embodiment of the invention. This routine is executed when the printer 40 is newly connected to the LAN (initial setting process). The left flow of Fig. 4 shows a series of processing executed by the printer 40, whereas the right flow shows a series of processing executed by the server 20.

When newly establishing connection with the LAN, the printer 40 broadcasts an IP address allocation request and obtains an IP address allocated by the DHCP server 10 (step S100). In the structure of this embodiment, the IP address is allocated on the temporary basis to be valid only during connection of the printer 40 with the LAN. A fixed IP address on the permanent basis may alternatively be allocated. The printer 40 subsequently broadcasts a server detection request including the MAC address given as the identification information of the printer 40 and searches for the server 20, which stores the setting information mapped to the MAC address of the printer 40 (step S110).

The server 20 receives the broadcasted server detection request from the printer 40 (step S112) and sends back a response to the printer 40 (step S114).

The printer 40 receives the response from the server 20 to detect the server 20 (step S116) and establishes communication with the server 20 by unicast (step S120). The printer 40 then transmits the MAC address with a setting information transmission request to the server 20 (step S130).

The server 20 receives the setting information transmission request from the printer 40 (step S140), refers to the memory module 26 to select the setting information mapped to the MAC address of the printer 40 (step S150), and transmits the selected setting information to the printer 40 (step S160).

The printer 40 receives the selected setting information (step S170) and updates the storage contents of the setting information memory module 48, based on the received setting information (step S180). The processing of steps S130 through S170 may be carried out in combination with the processing of steps 110 through S116. In one modified arrangement, the DHCP server 10 may have the functions of the server 20 to store and supply the setting information. The setting information transmitted at step S160 may be included in the response sent back at step S114. This arrangement enables the processing of steps S130 through S170 to be executed simultaneously with the processing of steps S110 through S116.

On completion of this initial setting process, the setting information obtained from the server 20 is stored in the setting information memory module 48 of the printer 40. Subsequent update of the setting information (setting update process) is carried out according to the setting information stored in the setting information memory module 48, such as the 'URL of the server' and the 'date and time of a next access'. The setting update process skips the processing of steps S100 and S110 in the setting information update routine of Fig. 4 discussed above. The setting information update routine may be executed not at preset timings, such as the 'date and time of a next access' but on every activation of the printer 40.

The printer 40 of the first embodiment described above obtains the setting information from the server 20 to implement auto setting. Even when there are a large number of printers as the objects of setting operations for initial setting or setting update, this arrangement does not require each user to specify the settings of each printer by manual input, thus desirably relieving the load of the setting operations.

### E. Update Process of Setting Information (Second Embodiment)

In the structure of the first embodiment, the printer 40 searches for the server 20 and sends the setting information transmission request to the server 20. In the structure of a second embodiment, on the other hand, a known IP address to the server 20 is allocated in advance to each of the printers 40. When the network administrator updates the setting information stored in the server 20, the server 20 transmits all pieces of the setting information to each of the printers 40, regardless of the presence or the absence of the setting information transmission request from the printer 40. The control module 44 included in the printer 40 of the second embodiment has the function of selecting a series of the setting information mapped to the own MAC address among multiple series of the setting information mapped to MAC addresses of multiple printers.

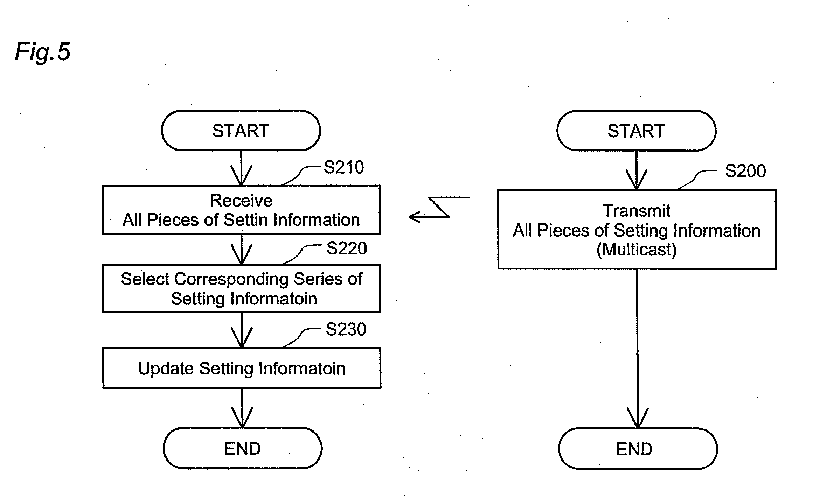

Fig. 5 is a flowchart showing a setting information update routine executed in the second embodiment. The left flow shows a series of processing executed by the printer 40, whereas the right flow shows a series of processing executed by the server 20.

Every time the network administrator updates the setting information stored in the memory module 26, the server 20 transmits all pieces of the setting information to each of the printers 40 by multicast, regardless of the presence or the absence of a setting information transmission request from the printer 40 (step S200). The transmission may alternatively be made by broadcast.

The printer 40 receives all pieces of the setting information transmitted from the server 20 (step S210), selects a series of the setting information mapped to the own MAC address, which is stored in the identification information storage module 46 (step S220), and updates the storage contents of the setting information memory module 48, based on the selected series of the setting information (step S230).

Like the printer 40 of the first embodiment, the printer 40 of the second embodiment obtains the setting information from the server 20 to implement auto setting. This arrangement also relieves the load of the setting operations. In response to every update of the setting information stored in the server 20, the setting information is transmitted from the server 20 to each of the printers 40. This structure effectively reduces non-required accesses from the printers 40 to the server 20.

### F. Modifications

The embodiments discussed above are to be considered in all aspects as illustrative and not restrictive. There may be many modifications, changes, and alterations without departing from the scope or spirit of the main characteristics of the present invention. Some examples of possible modification are given below.

### F1. Modified Example 1

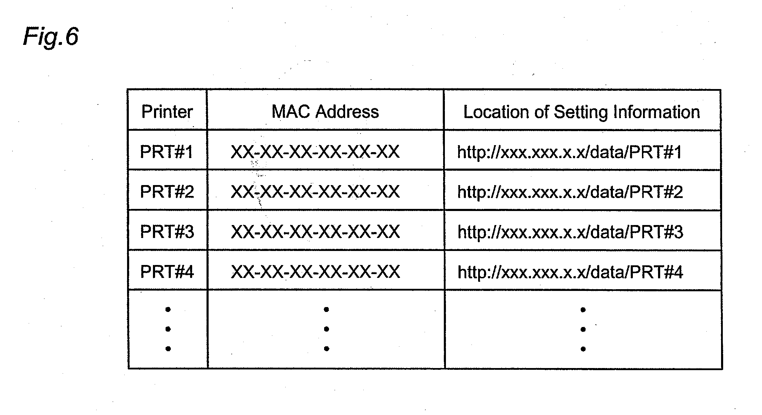

The functions of the server 20 in either of the above embodiments may be carried out by multiple servers. Fig. 6 conceptually shows an example of information stored in the server 20 in modified example 1. The server 20 stores a mapping of the MAC address of each printer 40 to the location of another server on the LAN, which stores the setting information corresponding to the MAC address of the printer 40. The printer 40 establishes communication with the server 20 to specify the location of another server on the network, which stores the setting information corresponding to the own MAC address, and gains access to the specified location to obtain the corresponding setting information.

### F2. Modified Example 2

In either of the above embodiments, the server 20 is located on the LAN, to which the printers 40 are connected. The server 20 may, however, be located on another network. When the server 20 is located on another network, however, the router 50 limits the external access to the LAN. It is accordingly preferable that each of the printers 40 pulls the setting information out of the server 20, instead of the push-type transmission of the setting information from the server 20 to the printer 40.

### F3. Modified Example 3

In the structure of the first embodiment, the printer 40 has the search unit 43, which searches for the location of the server 20 on the LAN. In one modified structure, the server 20 may have a search unit that searches for the location of each printer 40 on the LAN.

### F4. Modified Example 4

In the structure of the second embodiment, in response to every update of the setting information stored in the memory module 26, the server 20 transmits all pieces of the setting information to each of the printers 40 by multicast, regardless of the presence or the absence of the setting information transmission request from the printer 40. This arrangement is, however, not restrictive at all. In one possible modification, the server 20 transmits a notice showing that the setting information has been updated to each of the printers 40 by unicast, and the printer 40 receives the notice and sends a setting information transmission request to the server 20 to obtain the setting information.

### F5. Modified Example 5

In the embodiments discussed above, the MAC address allocated in advance to each printer 40 at the time of shipment is used as the identification information. The identification information is, however, not restricted to the MAC address. Any suitable information set after the shipment of the printer 40, for example, a fixed IP address allocated to each of the printers 40 on the permanent basis or a specified 'name' of each printer 40, may be used as the identification information.

The identification information may otherwise be set based on the location of each printer 40. Available examples of the identification information set based on the location of each printer 40 include global positioning information of the printer 40 by the GPS (Global Positioning System), coordinate information of the printer 40 in a preset space, and floor or area information on or in which the printer 40 is located, like the first floor or the second floor of a building. The global positioning information may be input automatically from a GPS cell phone or another position detector into the printer 40 or may be input manually by the user. When one of the printers 40 at a certain location is replaced by another printer having the functions of the network device of the present invention, the setting information for the old printer 40 can readily be carried over to the replaced printer.

### F6. Modified Example 6

The embodiments regard the application of the present invention to the printers. This is, however, not restrictive at all. The technique of the invention is applicable to other network devices, such as personal computers, routers, scanners, and various network-oriented electric appliances.

The scope and spirit of the present invention are indicated by the appended claims, rather than by the foregoing description.

## Claims

1. A network device that connects with an information processing device via a network, the information processing device storing setting information which is used for a preset control of the network device, said network device comprising:
a setting information memory module that is configured to store the setting information;
a receiver module that receives the setting information, which is mapped to predetermined identification information allocated to said network device, via the network from the information processing device; and
an update module that updates the storage in the setting information memory module, based on the received setting information.

2. A network device in accordance with claim 1, wherein said update module selects the setting information mapped to the predetermined identification information for identifying said network device among the received setting information, when the received setting information includes setting information mapped to identification information allocated to another network device.

3. A network device in accordance with claim 1, said network device further comprising:
a transmitter module that sends a transmission request of the setting information to said information processing device via the network.

4. A network device in accordance with claim 3, wherein the transmission request includes the predetermined identification information.

5. A network device in accordance with claim 3, wherein said transmitter module sends the transmission request in response to a requirement from said information processing device.

6. A network device in accordance with claim 3, said network device further comprising:
a search module that searches for a location of said information processing device on the network.

7. A network device in accordance with claim 3, wherein said information processing device is present at a certain location on the network, which is known to said network device.

8. A network device in accordance with claim 3, wherein said transmitter module sends the transmission request on a start-up of said network device.

9. A network device in accordance with claim 3, wherein the setting information includes transmission timing information regarding a timing of the transmission, and
said transmission module sends the transmission request based on the transmission timing information.

10. A network device in accordance with claim 3, wherein said transmitter module sends the transmission request, when said receiver module receives a notice showing that the setting information stored in said information processing device has been updated.

11. A network device in accordance with claim 1, wherein the identification information is set in advance on shipment of said network device.

12. A network device in accordance with claim 1, wherein the identification information is set after shipment of said network device.

13. A network device in accordance with claim 12, wherein the identification information is set based on a location of said network device.

14. A network device in accordance with claim 1, wherein said network device is a printing device.

15. A setting method of carrying out specified setting to control a network device connecting with a network in use, said setting method comprising the steps of:
(a) providing a setting information memory module that stores setting information used for a preset control of said network device;
(b) receiving setting information, which is mapped to predetermined identification information allocated to said network device for identification thereof, via the network from an information processing device that is connected with the network and stores the setting information mapped to the predetermined identification information for identifying said network device; and
(c) updating the storage in the setting information memory module, based on the received setting information.

16. A recording medium in which a computer program used for carrying out specified setting to control a network device connecting with a network is recorded, said computer program causing a computer to attain the functions of:
receiving setting information, which is used for a preset control of said network device and is mapped to predetermined identification information allocated to said network device for identification thereof, via the network from an information processing device that is connected with the network and stores the setting information mapped to the predetermined identification information for identifying said network device; and
updating a storage content in a setting information memory module, which is incorporated in said network device to store the setting information therein, based on the received setting information.
